# EUROPÄISCHE PATENTSCHRIFT

(11) **EP 2 020 515 B1**
(45) Veröffentlichungstag und Bekanntmachung des Hinweises auf die Patenterteilung: **28.12.2011**
(21) Anmeldenummer: 07014940.6
(22) Anmeldetag: 30.07.2007
(51) Int. Cl.: F16D 13/02, F16D 13/08, F16D 13/72, F16D 41/20

(54) **Schlingfederkupplung**
Looped spring clutch
Couplage de ressort enroulé

(43) Veröffentlichungstag der Anmeldung: 04.02.2009
(73) Patentinhaber: Hoerbiger Antriebstechnik GmbH, 86956 Schongau (DE)
(72) Erfinder: Nickel, Falk, 86925 Fuchstal (DE); Oswald, Johann, 82438 Eschenlohe (DE); Ackermann, Jürgen, Dr., 86875 Waal (DE); Sielaff, Tilo, 86971 Peiting (DE)
(74) Vertreter: Kitzhofer, Thomas

(56) Entgegenhaltungen:
- JP-A- 59 208 225
- US-A- 4 250 984

## Beschreibung

Die Erfindung betrifft eine Schlingfederkupplung gemäß dem Oberbegriff des Anspruches 1.

Im Zuge der Automatisierung und elektronischen Regelung von Antrieben für Maschinen und Kraftfahrzeuge hat die Bedeutung von Kupplungen mit entsprechenden Eigenschaften zugenommen. Die Kernanforderungen sind eine hohe Drehmomentvariabilität, kurze Reaktionszeit, kleiner Bauraum, geringer Aufwand und Energiebedarf des Kupplungsaktuators, hohe Zuverlässigkeit und möglichst konstantes Verhalten über den gesamten Lebensdauerzyklus. Zur Anwendung kommen heute vor allem Lamellenkupplungen mit unterschiedlichen Aktuatorsystemen. Diese können elektrisch, elektro-hydraulisch, pneumatisch, mechanisch oder mit MRF/ERF ausgeführt sein. Bei den bekannten Systemen ist der Aufwand mit zunehmendem Drehmomentbedarf sowohl für den übertragenden Teil als auch das Aktuatorsystem hoch. Die Integration des Systems ist zunehmend schwieriger und die Kosten hierfür steigen.

Eine dem Oberbegriff des Anspruches 1 entsprechende Schlingfederkupplung (US-A-4,250,984) ist bis heute nur als passives Element, z.B. als Drehmomentbegrenzer, oder als aktives Element in Ausführungen eingesetzt worden, die jedoch nur eine An-/Aus-Funktion haben. Für eine Anwendung als trocken laufende Hochleistungskupplung im geregelten Betrieb wäre ferner keine ausreichende Kühlung gegeben.

Die JP 59 208225 A offenbart eine Schlingfederkupplung, die zur Kühlung der Schlingfeder Belüftungslöcher im Kontrollring der Schlingfederkupplung aufweist. Da die Belüftungslöcher im Kontrollring der Kupplung angeordnet sind, erfolgt die Kühlung nur lokal und nicht unmittelbar an der Reibfläche, wo die Wärme entsteht. Ferner können Verschmutzungen durch die Löcher in den Innenbereich der Kupplung gelangen.

Es ist daher Aufgabe der vorliegenden Erfindung, eine Schlingfederkupplung der im Oberbegriff des Anspruches 1 angegebenen Art zu schaffen, die eine effektive Kühlung für eine Anwendung im Trockenlaufbetrieb ermöglicht.

Die Lösung dieser Aufgabe erfolgt durch die Merkmale des Anspruchs 1.

Die Unteransprüche haben vorteilhafte Weiterbildungen der Erfindung zum Inhalt.

Bei der erfindungsgemäßen Schlingfederkupplung ist die Reibfläche im Gegensatz zur Lamellenkupplung nicht auf mehrere einzelne Scheiben verteilt, sondern auf einem kompakten Zylinder angeordnet, wobei die Reibfläche je nach System auf der Innen- oder Außenseite liegt. In dem Zylinder, der entweder die zentrale innere Welle oder die die Schlingfeder außen umgebende Hohlwelle sein kann, lässt sich auf einfache Art und Weise eine Wasser-Kühleinrichtung integrieren.

Hierfür können beispielsweise Längsbohrungen vorgesehen werden, die von einem Kühlmedium, insbesondere Kühlwasser, durchströmt werden können. Die entstehende Reibwärme wird von der Reibfläche, in deren Nachbarschaft die Kühleinrichtung angeordnet ist, über Wärmeleitungen abtransportiert und an das Kühlmedium übergeben.

An Stelle von Längsbohrungen kann es z.B. bei einer außen wirkenden Schlingfederkupplung möglich sein, eine äußere Hohlwelle mit einem doppelwandigen Mantel vorzusehen. Zwischen der inneren Wand, welche auf der Innenseite die Reibfläche aufweist, und dem äußeren Mantel der äußeren Hohlwelle kann dann Kühlwasser hindurchgepumpt werden.

Die Vorteile einer wassergekühlten Schlingfederkupplung liegen insbesondere im Bereich des Umweltschutzes. Denn es ist möglich, gänzlich auf den Gebrauch von Schmierstoffen als Kühlmittel zu verzichten, was die Freisetzung von wassergefährdenden Stoffen verhindert. Gleichzeitig ist es jedoch möglich, selbst bei ansteigenden Anforderungen an die Übertragungselemente im Antriebsstrang eines Kfz die Leistungsfähigkeit der erfindungsgemäßen Kupplung zu erhöhen, da eine ausreichende Kühlung gewährleistet ist, so dass sich die erfindungsgemäßen Schlingfederkupplung insbesondere für den geregelten Betrieb eignet, bei dem ein Aktuator zur Aufbringung einer geregelten Tangentialkraft auf zumindestens eines der Schlingfederenden entgegen deren Wickelrichtung wirkt. Ferner ergibt sich der Vorteil einer funktionalen Trennung zwischen Kühlmedium und tribologischem System, was bedeutet, dass vorzugsweise der Reibkontakt trocken erfolgen kann oder Öl rein für die Reibeigenschaften zugeführt werden kann.

Weitere Einzelheiten, Vorteile und Merkmale der Erfindung ergeben sich aus nachfolgender Beschreibung einer Ausführungsform anhand der Zeichnung. Es zeigt:
- Fig. 1: eine stark schematisch vereinfachte Stirnansicht des generellen Aufbaues einer Schlingfederkupplung,
- Fig. 2: eine schematisch stark vereinfachte Stirnansicht einer erfindungsgemäßen Schlingfederkupplung, und
- Fig. 3: eine ebenfalls schematisch stark vereinfachte Schnittansicht der Schlingfederkupplung gemäß Fig. 2.

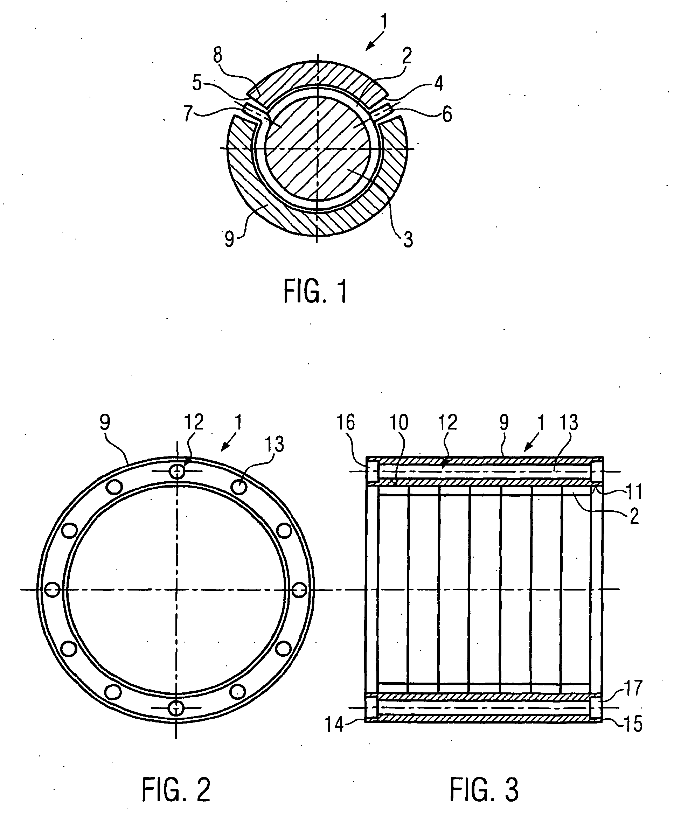

In Fig. 1 ist zur Erläuterung eines generell möglichen Aufbaues einer Schlingfederkupplung 1 eine Schlingfeder 2 dargestellt, die mit Vorspannung auf einer fixierten Achse 3 angeordnet ist. An den beiden in oder durch Ausnehmungen 4 und 5 ragenden Federenden 6 und 7 greift je nach Drehrichtung ein Segment 8 eines Antriebsteils an. Bei Last am Abtrieb wird durch Formschluss über das jeweilige Federende 6 bzw. 7 und eine Hohlwelle 9 mitgedreht. Entsteht am Abtrieb ein Drehmoment, welches den Antrieb überholen will, blockiert das Segment 8 über das jeweilige Federelement 6 bzw. 7 der Schlingfeder 2.

Dieses System bedingt ein minimales Spiel zwischen den Flanken des Segmentes 8 und der Hohlwelle 9 und den Federenden 6 und 7 und ist drehrichtungsunabhängig. Die Wicklungsrichtung der Schlingfeder 2 hat ebenfalls keinen Einfluss auf die Funktion.

Anstelle einer fixierten Achse 3 kann ein entsprechender Aufbau in einer in Fig. 1 nicht näher dargestellten Hülse in einem Gehäuse vorgesehen sein. Die Enden 6 und 7 der Schlingfeder 2 sind dann entsprechend nach innen gebogen.

Gemäß Fig. 2 ist eine Stirnansicht der um die Schlingfeder 2 herum angeordneten Hohlwelle 9 dargestellt, die das Vorsehen einer Kühleinrichtung 12 verdeutlicht, die bei der in Fig. 2 und Fig. 3 dargestellten Ausführungsform eine Mehrzahl von Längsbohrungen aufweist, von denen eine repräsentativ mit der Bezugsziffer 13 gekennzeichnet ist. Im Beispielsfalle sind zwölf derartige Längsbohrungen vorgesehen, die, wie aus Fig. 3 ersichtlich, sich über die gesamte Länge der Hohlwelle 9 erstrecken. In den beiden gegenüberliegenden Stirnseiten 14 und 15 sind bei dieser Ausführungsform umlaufende Nuten 16, 17 dargestellt, die eine Einlaufnut und eine Ablaufnut für das Kühlwasser bilden und die im Betriebszustand mittels eines in den Figuren nicht dargestellten Deckels abgedeckt sind.

Wie sich aus der Darstellung der Fig. 3, in der die Schlingfeder 2, jedoch nicht die zentrale Welle 3 dargestellt ist, ergibt, weist die Schlingfeder im Beispielsfalle eine an ihrer Außenseite angeordnete Anlagefläche 10 auf, die mit einer nach innen weisenden Reibfläche 11 der Hohlwelle 9 zusammenwirkt. Somit wird aus Fig. 3 deutlich, dass die Kühleinrichtung 12 benachbart zur Reibfläche 11 vorgesehen ist, so dass auf einfache und zuverlässige Weise durch den Reibvorgang entstehende Wärme mittels des Wassers der Kühleinrichtung 12 abtransportiert werden kann.

Neben der voranstehenden schriftlichen Offenbarung der Erfindung wird hiermit explizit auf deren bildliche Darstellung in den Fign. 1 bis 3 Bezug genommen.

### Bezugszeichenliste

- 1: Schlingfederkupplung
- 2: Schlingfeder
- 3: Zentrale Welle
- 4, 5: Ausnehmungen
- 6, 7: Federenden
- 8: Segment
- 9: Hohlwelle
- 10: Anlagefläche
- 11: Reibfläche
- 12: Kühleinrichtung
- 13: Längsbohrungen
- 14, 15: Stirnflächen
- 16, 17: Umlaufende Nuten für das Kühlmedium, insbesondere Heißwasserzulaufnut bzw. Wasserablaufnut

## Patentansprüche

1. Schlingfederkupplung (1) mit
einer zentralen Welle (3),
einer Schlingfeder (2), die um die zentrale Welle (3) in einer Wickelrichtung herumgewickelt ist und zwei Schlingfederenden (6, 7) aufweist, und
einer um die Schlingfeder (2) herum angeordneten Hohlwelle (9),
wobei die zentrale Welle (3) oder die Hohlwelle (9) eine Reibfläche (11) und die Schlingfeder eine Anlagefläche (10) zum Zusammenwirken mit der Reibfläche (11) aufweist,
wobei eine Kühleinrichtung (12) vorgesehen ist, die benachbart zur Reibfläche (11) angeordnet ist
**dadurch gekennzeichnet, dass**
die Kühleinrichtung (12) Wellen-Längsbohrungen (13) oder einen doppelwandigen Wellenmantel zur Hindurchleitung von Kühlmedium aufweist.

2. Schlingfederkupplung nach Anspruch 1 , **dadurch gekennzeichnet, dass** die Kühleinrichtung (12) in der zentralen Welle (3) angeordnet ist.

3. Schlingfederkupplung nach Anspruch 1, **dadurch gekennzeichnet, dass** die Kühleinrichtung (12) in der Hohlwelle (9) angeordnet ist.

4. Schlingfederkupplung nach einem der vorhergehenden Ansprüche, **dadurch gekennzeichnet, dass** falls die kuhleihrichtung (12) als wellen- Längsbarungen (13) ausgebildet ist, Kühleinrichtung (12) an den Wellen-Stirnseiten (14, 15) angeordnete, vorzugsweise umlaufende Kühlmedium-Zulauf- bzw. -Ablaufnuten (16, 17) aufweist.

5. Schlingfederkupplung nach Anspruch 4, **dadurch gekennzeichnet, dass** die Nuten (16, 17) mit jeweils einem Deckel verschlossen sind.

6. Schlingfederkupplung nach einem der vorhergehenden Ansprüche, **dadurch gekennzeichnet, dass** die Kühleinrichtung (12) ausgebildet ist, um mit Kühlwasser als Kühlmedium betrieben zu werden.

7. Schlingfederkupplung nach Anspruch 6, **dadurch gekennzeichnet, dass** die Kühleinrichtung (12) desart ausgebildet ist, dass Kühlwasser durch die Kühleinrichtung gepumpt werden kann.

## Claims

1. A wrap spring clutch (1) comprising
a central shaft (3),
a wrap spring (2) which is wound around the central shaft (3) in a winding direction and includes two wrap spring ends (6, 7), and
a hollow shaft (9) arranged around the wrap spring (2),
the central shaft (3) or the hollow shaft (9) including a friction surface (11) and the wrap spring including a contact surface (10) for cooperating with the friction surface (11),
a cooling device (12) being provided which is arranged adjacent to the friction surface (11),
**characterized in that** the cooling device (12) includes longitudinal shaft bores (13) or a double-walled shaft casing for passing cooling medium therethrough.

2. The wrap spring clutch according to claim 1, **characterized in that** the cooling device (12) is arranged in the central shaft (3).

3. The wrap spring clutch according to claim 1, **characterized in that** the cooling device (12) is arranged in the hollow shaft (9).

4. The wrap spring clutch according to any of the preceding claims, **characterized in that**, if the cooling device (12) is in the form of longitudinal shaft bores (13), the cooling device (12) includes preferably encircling cooling medium inlet and outlet grooves (16, 17) arranged on the front faces (14, 15) of the shaft.

5. The wrap spring clutch according to claim 4, **characterized in that** the grooves (16, 17) are closed by a respective cover.

6. The wrap spring clutch according to any of the preceding claims, **characterized in that** the cooling device (12) is designed to be operated with cooling water as the cooling medium.

7. The wrap spring clutch according to claim 6, **characterized in that** the cooling device (12) is designed such that cooling water can be pumped through the cooling device.

## Revendications

1. Embrayage à ressort enroulé (1), comportant
un arbre central (3),
un ressort enroulé (2) qui est enroulé dans un sens d'enroulement autour de l'arbre central (3) et qui présente deux extrémités (6, 7) de ressort enroulé,
un arbre creux (9) agencé autour du ressort enroulé (2),
l'arbre central (3) ou l'arbre creux (9) présentant une surface de friction (11), et le ressort enroulé présentant une surface d'appui (10) pour la coopération avec la surface de friction (11),
un dispositif de refroidissement (12) étant prévu, lequel est agencé de manière à être adjacent à la surface de friction (11),
**caractérisé en ce que**
le dispositif de refroidissement (12) présente des alésages d'arbre longitudinaux (13) ou une enveloppe d'arbre à double paroi pour le passage d'agent réfrigérant à travers ces derniers.

2. Embrayage à ressort enroulé selon la revendication 1, **caractérisé en ce que** le dispositif de refroidissement (12) est agencé dans l'arbre central (3).

3. Embrayage à ressort enroulé selon la revendication 1, **caractérisé en ce que** le dispositif de refroidissement (12) est agencé dans l'arbre creux (9).

4. Embrayage à ressort enroulé selon l'une des revendications précédentes, **caractérisé en ce que** dans la cas où le dispositif de refroidissement (12) est réalisé sous forme d'alésages d'arbre longitudinaux (13), le dispositif de refroidissement (12) présente des gorges (16, 17) d'amenée et de sortie d'agent réfrigérant de préférence circonférentielles qui sont agencées sur les faces frontales (14, 15) de l'arbre.

5. Embrayage à ressort enroulé selon la revendication 4, **caractérisé en ce que** les gorges (16, 17) sont fermées au moyen d'un couvercle respectif.

6. Embrayage à ressort enroulé selon l'une des revendications précédentes, **caractérisé en ce que** le dispositif de refroidissement (12) est réalisé de manière à être mis en oeuvre avec de l'eau réfrigérante comme agent réfrigérant.

7. Embrayage à ressort enroulé selon la revendication 6, **caractérisé en ce que** le dispositif de refroidissement (12) est réalisé de telle sorte qu'il est possible de pomper de l'eau réfrigérante à travers le dispositif de refroidissement.
